# EUROPÄISCHE PATENTANMELDUNG

(11) **EP 2 250 953 A1**
(43) Veröffentlichungstag der Anmeldung: **17.11.2010**
(21) Anmeldenummer: 09006335.5
(22) Anmeldetag: 11.05.2009
(51) Int. Cl.: A47J 47/00

(54) **In Höhe und Neigung veränderbares Schneidbrett**

(71) Anmelder: TECOplast GmbH, 72178 Waldachtal (DE)
(72) Erfinder:
(74) Vertreter: Späth, Dieter

(57) **Zusammenfassung**

Die Erfindung betrifft ein Schneidbrett (1) zum Zerkleinern von Nahrungsmitteln, insbesondere zum Auflegen auf eine Arbeitsplatte einer Küche, mit einer Schneidplatte (2), die eine Schneidfläche (4) und eine der Schneidfläche (4) gegenüberliegende Unterseite (5) aufweist, und mit einem Schneidplattenuntersatz (3, 3', 3"), der die Schneidplatte (2) an der Unterseite (5) stützt. Erfindungsgemäß weist der Schneidplattenuntersatz (3, 3', 3") eine Schraubhöhenverstellung (8) für die Schneidplatte (2) auf, die vorzugsweise auf der der Schneidplatte (2) zugeordneten Seite des Schneidplattenuntersatzes (3, 3', 3") angeordnet ist. Für die Stützung der Schneidplatte (2) weist die Schraubhöhenverstellung (8) vorzugsweise einen Gewindebolzen (13) auf, der in ein Eingriffselement (14) an der Unterseite (5) der Schneidplatte (2) eingreift.

## Beschreibung

Die Erfindung betrifft ein Schneidbrett zum Zerkleinern von Nahrungsmitteln, insbesondere zum Auflegen auf eine Arbeitsplatte einer Küche, mit einer Schneidplatte, die eine Schneidfläche und eine der Schneidfläche gegenüberliegende Unterseite aufweist, und mit einem Schneidplattenuntersatz, der die Schneidplatte an der Unterseite stützt.

Schneidbretter für den Küchenbedarf sind hinlänglich bekannt. Sie verhindern die Beschädigung einer Arbeitsplatte der Küche beim Zerschneiden der Nahrungsmittel und schonen das benutzte Messer. Es gibt sie aus Holz und verschiedenen anderen Werkstoffen, beispielsweise Kunststoffen, Glas, Keramik oder Stein. Sie sind üblicherweise als flache, ebene Schneidbretter in verschiedenen Formen ausgeführt und weisen eine für das Zerkleinern von Nahrungsmitteln geeigneten Schneidfläche auf. Sie haben häufig eine rechteckige Form mit abgerundeten Ecken. Die Schneidfläche ist gewöhnlich plan und weist meist eine umlaufende Vertiefung an einem Rand auf, die als Saftrinne dient.

Es sind derartige Schneidbretter bekannt, die entweder unmittelbar auf die Arbeitsplatte der Küche aufgelegt werden oder über Standfüße in Eckbereichen der Schneidbretter von der Arbeitsplatte beabstandet gehalten werden. Beispielhaft wird auf die Druckschriften DE 75 34 034 U1, DE 298 12 836 U1 und DE 81 25 655 U1 verwiesen.

Die Arbeitshöhe beim Zerkleinern der Nahrungsmittel ist bei herkömmlichen Schneidbrettern durch die Höhe der Arbeitsplatte gegenüber einem Küchenboden sowie durch die Dicke des Schneidbrettes und gegebenenfalls die Höhe der Standfüße bestimmt. Groß gewachsene Personen müssen sich bei den Schneidarbeiten in der Regel bücken, um die Arbeiten gut ausführen zu können. Die gebeugte Haltung führt bei längeren Schneidarbeiten zu Ermüdung und Rückenproblemen und auf Dauer sogar zu bleibenden Haltungsschäden.

Zur Behebung dieses Problems ist aus der DE 195 09 739 C1 ein verbessertes Schneidbrett bekannt geworden. Das verbesserte Schneidbrett weist zwei Unterlegleisten zur Höheneinstellung einer Schneidplatte des Schneidbrettes auf, die vorzugsweise als prismatische Mehrkante ausgebildet sind, wobei deren Querabmessungen in verschiedenen Querschnittsrichtungen verschieden sind. Die Unterlegleisten weisen insbesondere ein höhenverstellbares Auflageteil auf, mit dem die Querabmessungen in den verschiedenen Querschnittsrichtungen veränderbar sind. Durch das Unterlegen der beiden Unterlegleisten, insbesondere in Abhängigkeit ihrer Seitenlage und der Anordnung des Auflageteils kann bei dem bekannten verbesserten Schneidbrett die Schneidfläche in Stufen in der Höhe eingestellt und damit an die Körpergröße des Benutzers des Schneidbrettes angepasst werden.

Nachteilig ist dabei, dass die Neigung der Schneidplatte durch die prismatische Mehrkante bestimmt ist und damit nicht veränderbar ist. Des weiteren ist es ungünstig, dass die Höhe einer Schneidfläche der Schneidplatte bezüglich der Arbeitsplatte der Küche nicht stufenlos einstellbar ist und dass die Schneidplatte wackelig von den Unterlegleisten getragen ist, wenn die Arbeitsplatte und/oder die Schneidplatte nicht plan sind.

Ausgehend von dem vorstehend beschriebenen Stand der Technik liegt der Erfindung die Aufgabe zugrunde, ein verbessertes Schneidbrett mit stufenloser Höhen- und Neigungseinstellmöglichkeit der Schneidfläche vorzuschlagen, wobei in jeder Einstellung die Schneidplatte sicher lagestabil gehalten ist.

Diese Aufgabe wird erfindungsgemäß durch ein Schneidbrett mit den Merkmalen des unabhängigen Patentanspruchs 1 gelöst. Weitere vorteilhafte Ausgestaltungen sind den rückbezogenen Ansprüchen zu entnehmen.

Das erfindungsgemäße Schneidbrett zum Zerkleinern von Nahrungsmitteln weist eine Schraubhöhenverstellung für die Schneidplatte auf. Ein Schneidplattenuntersatz ist zum Auflegen auf eine Arbeitsplatte einer Küche vorgesehen und stützt über die Schraubhöhenverstellung die Schneidplatte des Schneidbrettes auf einer der Arbeitsplatte zugeordneten Unterseite ab. Der Unterseite gegenüberliegend angeordnet ist die Schneidfläche der Schneidplatte.

Die Schraubhöhenverstellung des Schneidplattenuntersatzes weist mindestens drei unabhängig voneinander verstellbare Schraubelemente mit Bewegungsgewinden auf, die ermöglichen, die Höhe und/oder die Neigung der Schneidplatte gegenüber der Arbeitsplatte zu variieren. Dabei können die Schraubelemente mit der Arbeitsplatte oder mit der Schneidplatte zusammenwirken. Die Schraubelemente sind auch bei nicht planer bzw. verschmutzter Arbeitsplatte oder bei durch Alterung verzogener Schneidplatte so einstellbar, dass sie die Schneidplatte sicher und lagestabil halten. Ein Wackeln der Schneidplatte beim Zerschneiden der Nahrungsmittel ist damit ausgeschlossen. Prinzipiell kann das erfindungsgemäße Schneidbrett, beispielsweise von kleinen Personen auch ohne den Schneidplattenuntersatz verwendet werden.

Bei einer bevorzugten Ausführungsform der Erfindung ist die Schraubhöhenverstellung auf der der Schneidplatte zugeordneten Seite des Schneidplattenuntersatzes angeordnet. Dabei stehen die Schraubelemente in Richtung der Schneidplatte über den Schneidplattenuntersatz vor. Bei einer Weiterbildung der Erfindung weist die Schraubhöhenverstellung Gewindebolzen als Schraubelemente für die Stützung der Schneidplatte auf. Die Gewindebolzen können von Hand oder mittels eines Hilfswerkzeugs aus dem Schneidplattenuntersatz heraus oder in diesen hinein gedreht werden. Für eine vereinfachte Verstellung kann der Gewindebolzen einen Schlitz, einen Kreuzschlitz oder einen kantigen Bereich zum drehfesten Angreifen des Hilfswerkzeugs oder Griffmulden, einen Rändel, eine Gummierung für die Hand aufweisen.

Bei einer vorteilhaften Ausführungsform des erfindungsgemäßen Schneidbretts weist die Schneidplatte an der Unterseite Eingriffselemente für die Schraubelemente, insbesondere für die Gewindebolzen der Schraubhöhenverstellung auf. Die Eingriffselemente an der Unterseite der Schneidplatte sind in der Querschnittsform komplementär zu den Schraubelementen der Schraubhöhenverstellung des Schneidplattenuntersatzes ausgebildet und insbesondere im Durchmesser an diese angepasst. Die Eingriffselemente können vertieft oder erhaben ausgebildet sein. Die Schraubelemente sind bei auf dem Schneidplattenuntersatz aufliegender Schneidplatte mit den Eingriffselementen in Eingriff, wodurch eine horizontale Relativverschiebung zwischen der Schneidplatte und dem Schneidplattenuntersatz verhindert ist.

Bei einer Weiterbildung dieser Ausführungsform weist die Schraubhöhenverstellung des Schneidplattenuntersatzes und/oder die Eingriffselemente der Schneidplatte eine Schnappeinrichtung auf. Mittels der Schnappeinrichtung kann der Schneidplattenuntersatz lösbar mit der Schneidplatte auf einfache Weise verbunden werden. Dies hat den Vorteil, dass die Schneidplatte nicht lose auf dem Schneidplattenuntersatz aufliegt, so dass das Schneidbrett angehoben werden kann ohne dass der Schneidplattenuntersatz auf der Arbeitsplatte liegen bleibt. Für eine Reinigung der Schneidplatte können der Schneidplattenuntersatz und die Schneidplatte des erfindungsgemäßen Schneidbrettes schnell und ohne Werkzeug voneinander getrennt und nach der Reinigung wieder zusammengesetzt werden.

Bei einer günstigen Ausgestaltung der Erfindung ist der Schneidplattenuntersatz von mindestens zwei im Winkel zueinander angeordneten, vorzugsweise lösbar miteinander verbundenen Unterlegleisten gebildet, wobei die Schraubelemente bzw. Gewindebolzen der Schraubhöhenverstellung vorzugsweise an Endabschnitten der Unterlegleisten angeordnet sind. Dazu weisen die Unterlegleisten an den Endabschnitten eine zylindrische Ausnehmung mit einer ein Innengewinde aufweisende Gewindebuchse oder mit einem angeformten Innengewinde auf, das mit einem Außengewinde des Gewindebolzens als Bewegungsgewinde zusammen wirkt. Die Unterlegleisten sind vorzugsweise X-, T-, V-, U- oder sternförmig angeordnet und weisen eine Überblattung auf. Überblattungen, die auch als Überschneidungen bezeichnet werden, sind als Holzverbindungen von mindestens zwei Teilen bekannt und auch für andere Materialien, beispielsweise für Kunststoffverbindungen einsetzbar. Sie ermöglichen eine einfache + - förmige oder X - förmige Überkreuzung oder auch eine T-förmige Anbindung der Unterlegleisten. Für eine einfache Überkreuzung genügt eine gewöhnliche bündige Überblattung, bei der die beiden Leisten auf halbe Stärke ausgenommen sind. Für eine T-förmige Anbindung ist eine beispielsweise geschwalbte Überblattung notwendig.

Die den Schneidplattenuntersatz bildenden Unterlegleisten können auf diese Weise durch eine formschlüssige Verbindung gegeneinander unverrückbar und voneinander leicht trennbar angeordnet werden. Dies hat den Vorteil, dass der Schneidplattenuntersatz, der in seinem Längen- und Breitenmaß in etwa den entsprechenden Maßen der Schneidplatte entspricht, einfach zerlegbar und zusammen mit der Schneidplatte verstaubar ist, wenn das Schneidbrett nicht benötigt wird.

Nachfolgend wird die Erfindung anhand dreier in der Zeichnung dargestellter Ausführungsbeispiele näher erläutert. Weitere Merkmale der Erfindung ergeben sich aus der folgenden Beschreibung der Ausführungsbeispiele der Erfindung in Verbindung mit den Ansprüchen und der beigefügten Zeichnung. Die einzelnen Merkmale können für sich allein oder zu mehreren bei unterschiedlichen Ausführungsformen der Erfindung verwirklicht sein. Es zeigen:
- Figur 1: ein erfindungsgemäßes Schneidbrett in Rechteckform in perspektivischer Darstellung;
- Figur 2: das Schneidbrett gemäß Figur 1 in Draufsicht von unten mit einem X-förmigen Schneidplattenuntersatz;
- Figur 3: das Schneidbrett gemäß Figur 1 in runder Ausführung in Draufsicht von unten mit einem T-förmigen Schneidplattenuntersatz;
- Figur 4: das Schneidbrett gemäß Figur 1 in runder Ausführung in Draufsicht von unten mit einem sternförmigen Schneidplattenuntersatz;
- Figur 5: das Schneidbrett gemäß Figur 2 mit örtlichen Schnitten;
- Figur 6: die Schraubhöhenverstellung gemäß Figur 5 in einer vergrößernden Achsschnittdarstellung; und
- Figur 7: die den Schneidplattenuntersatz aus Figur 2 bildenden Unterlegleis- ten, in verschiedenen Ansichten.

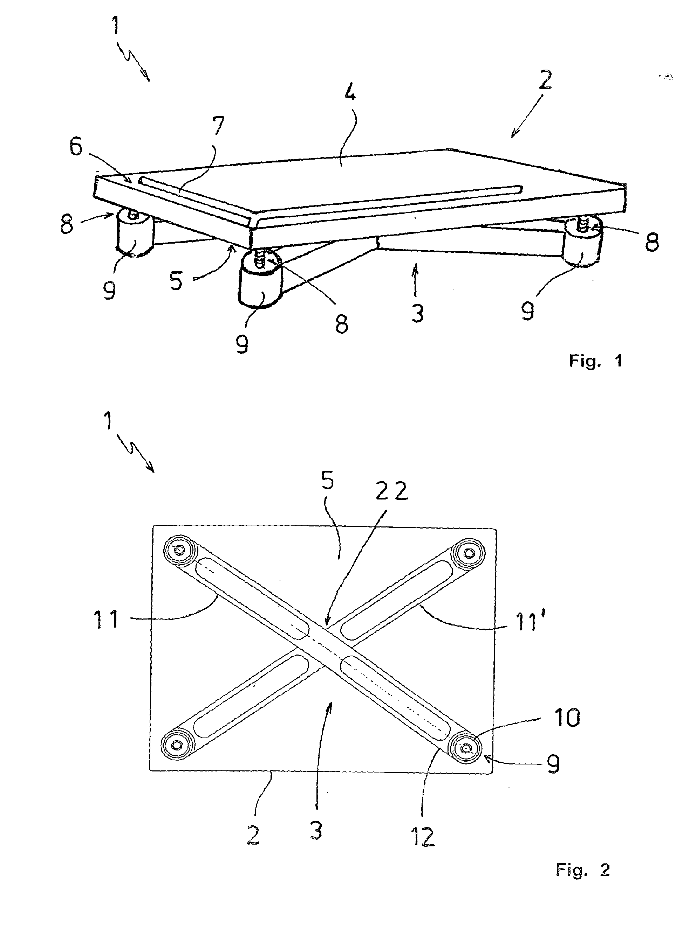

Die Figur 1 zeigt ein erfindungsgemäßes rechteckiges Schneidbrett in perspektivischer Darstellung. Das Schneidbrett 1 zum Auflegen auf eine in der Zeichnung nicht dargestellte Arbeitsplatte einer Küche weist eine Schneidplatte 2 und einen die Schneidplatte 2 stützenden Schneidplattenuntersatz 3 auf. Die Schneidplatte 2 weist eine Schneidfläche 4 als Oberseite und eine der Schneidfläche 4 gegenüberliegende Unterseite 5 auf. An der Unterseite 5 liegt der Schneidplattenuntersatz 3 an, entlang einem Randbereich 6 der Schneidfläche 4 verläuft eine Saftrinne 7. Der Schneidplattenuntersatz 3 weist eine Schraubhöhenverstellung 8 auf, mit der eine Höhe und eine Neigung der Schneidplatte 2 gegenüber dem Schneidplattenuntersatz 3 und damit gegenüber der Arbeitsplatte einstellbar ist. Das erfindungsgemäße Schneidbrett 1 zum Zerkleinern von Nahrungsmitteln kann prinzipiell eine beliebige von der Rechteckform abweichende Form aufweisen. Sie kann beispielsweise auch rund oder oval ausgeführt sein.

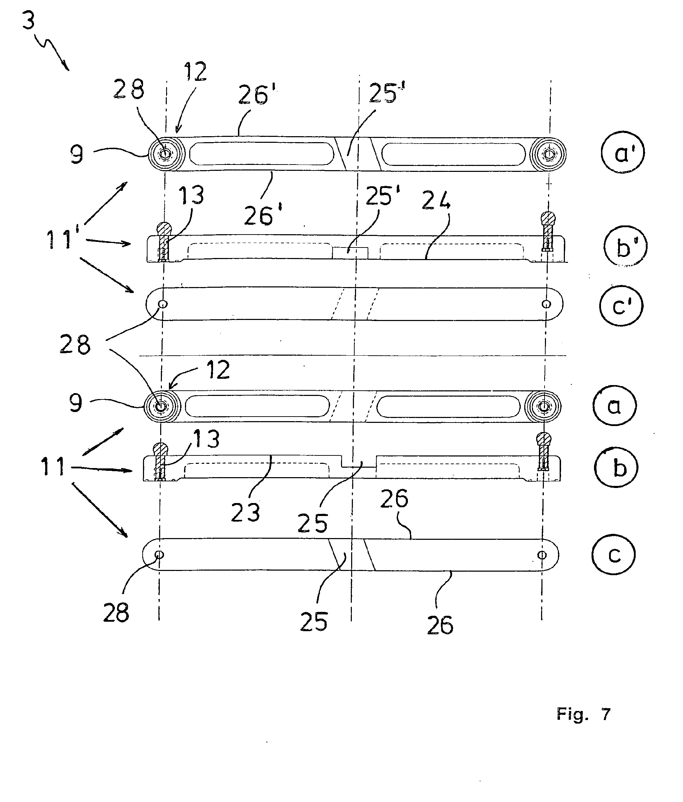

In Figur 2 ist das Schneidbrett 1 in Draufsicht von unten dargestellt. Der die Schneidplatte 2 in einer Schneidstellung des Schneidbrettes 1 tragende Schneidplattenuntersatz 3 ist X-förmig ausgebildet. Er ist wie die Schneidplatte 2 aus einem Kunststoffmaterial hergestellt und weist angeformte Standfüße 9 mit rutschhemmenden Einlagen 10 auf. Der Schneidplattenuntersatz 3 ist aus zwei sich kreuzenden Unterlegleisten 11, 11' zusammengesetzt, die in der Figur 7 in verschiedenen Ansichten getrennt voneinander abgebildet sind. Die Standfüße 9 sind an Endabschnitten 12 der Unterlegleisten 11, 11' angeordnet. Die beiden Unterlegleisten 11, 11' sind miteinander in Eingriff und damit unverrückbar zueinander. Anstelle einer formschlüssigen Verbindung kann alternativ auch eine stoffschlüssige Verbindung oder eine kraftschlüssige Schraubverbindung vorgesehen sein. Auch eine einstückige Ausführungsform des Schneidplattenuntersatzes 3 ist generell möglich.

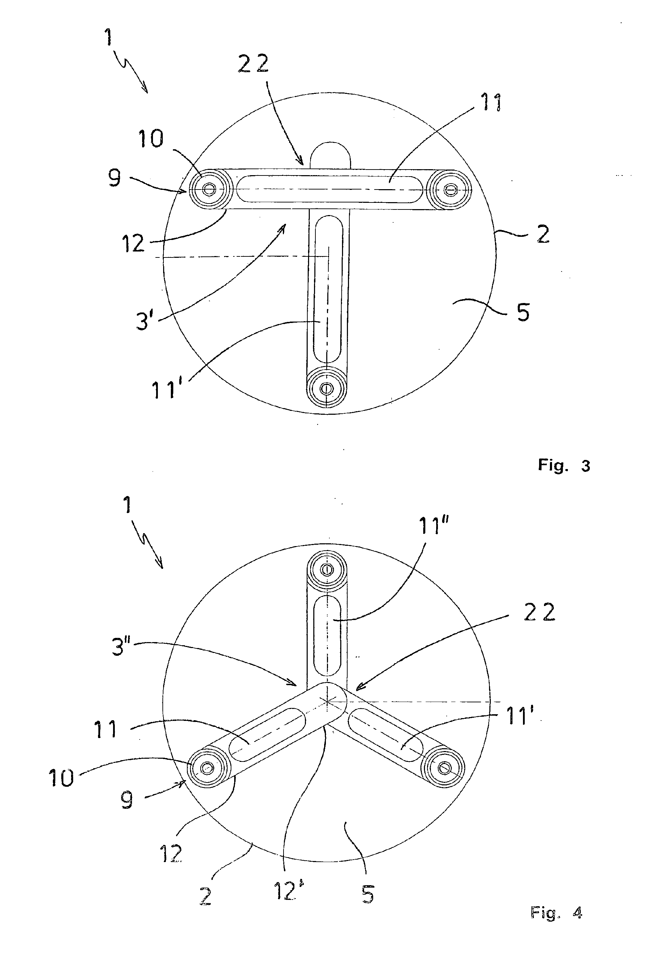

Die Figuren 3, 4 zeigen Varianten des Schneidplattenuntersatzes 3 für eine runde Schneidplatte 2. In der Figur 3 ist der Schneidplattenuntersatz 3' T-förmig ausgebildet, in der Figur 4 ist der Schneidplattenuntersatz 3" sternförmig. Der Schneidplattenuntersatz 3' weist zwei Unterlegleisten 11, 11' auf, die sich im rechten Winkel geringfügig überkreuzen und ansonsten im wesentlichen wie die Unterlegleisten 11, 11' des Schneidplattenuntersatzes 3 ausgebildet sind. Der Schneidplattenuntersatz 3" ist aus drei Unterlegleisten 11, 11', 11" zusammengesetzt, die in einem Winkel von 120° versetzt zueinander angeordnet sind. Die Unterlegleisten 11, 11', 11" sind an Endabschnitten 12' überlappend miteinander verschraubt und bilden einen dreiarmigen Stern.

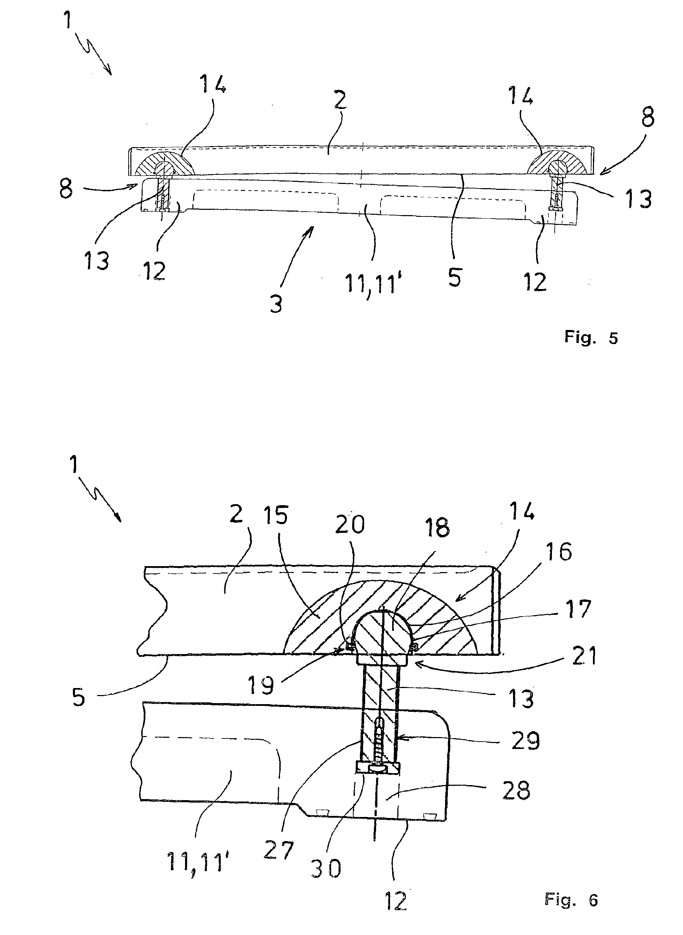

In der Figur 5 ist das Schneidbrett 1 mit der Schneidplatte 2 und dem Schneidplattenuntersatz 3 teilweise geschnitten abgebildet. An den Endabschnitten 12 der Unterlegleisten 11, 11' sind den Standfüßen 9 gegenüberliegend Gewindebolzen 13 der Schraubhöhenverstellung 8 angeordnet, die über den Schneidplattenuntersatz 3 in Richtung der Schneidplatte 2 vorstehen und die Schneidplatte 2 an der Unterseite 5 stützen. Die Gewindebolzen 13, die wie die Unterlegleisten 11, 11' aus Kunststoffmaterial bestehen, weisen ein Bewegungsgewinde auf, das mit einem an den Endabschnitten 12 ausgebildeten, in der Zeichnung nicht sichtbaren, insbesondere angeformten Innengewinde zusammenwirkt. Die Gewindebolzen 13 bilden abhängig von der Anzahl und der Verbindungsart der Unterlegleisten 11, 11', 11" bei den Schneidplattenuntersätzen 3, 3', 3" eine Dreipunkt- oder Vierpunktauflage für die Schneidplatte 2. Durch Drehen eines Gewindebolzens 13 oder mehrerer Gewindebolzen 13 um ihre Längsachse kann die Neigung und/oder die Höhe der Schneidplatte 2 gegenüber dem Schneidplattenuntersatz 3 geändert werden. Zur Höhenverstellung der Schneidplatte 2 gegenüber dem Schneidplattenuntersatz 3 müssen alle vorgesehenen Gewindebolzen 13 in gleicher Weise in die Unterlegleisten 11, 11' hinein oder aus diesen herausgedreht werden, zur Neigungseinstellung in unterschiedlicher Weise. Eine Neigungseinstellung ist auch in der Weise möglich, dass eine Ecke der Schneiplatte 2, an der die Saftrinnen 7 zusammenlaufen, am tiefsten ist. Flüssigkeit aus den Saftrinnen 7 läuft dann an dieser Ecke der Schneidplatte 2 ab.

Wie aus der Figur 5 außerdem ersichtlich, sind an der Unterseite 5 der Schneidplatte 2 dem Gewindebolzen 13 zugeordnete Eingriffselemente 14 vorgesehen, die eine unerwünschte horizontale Verschiebung der Schneidplatte 2 gegenüber dem Schneidplattenuntersatz 3 wirkungsvoll verhindern. Die Eingriffselemente 14 sind als Vertiefungen in der Schneidplatte 2 ausgebildet. Die Figur 6 zeigt eine vergrößerte Schnittdarstellung der Schraubhöhenverstellung 8 des Schneidbrettes 1.

Als Eingriffselement 14 für den Gewindebolzen 13 ist eine Kugelkalotte 15 in die Schneidplatte 2 an der Unterseite 5 eingelassen. Die Kugelkalotte 15 weist eine zentrale im wesentliche halbkugelförmige Ausnehmung 16 mit einem daran anschließenden zylindrischen Abschnitt 17 auf. Der Gewindebolzen 13 trägt ein auf die Ausnehmung 16 und dem zylindrischen Abschnitt 17 der Kugelkalotte 15 abgestimmten Kugelkopf 18, der von der Kugelkalotte 15 aufgenommen ist. An dem zylindrischen Abschnitt 17 ist in einer Ringnut 19 ein O-Ring 20 mit geringfügig geringerem Innendurchmesser als der Kugelkopf 18 angeordnet. Der O-Ring 20 bildet mit dem Kugelkopf 18 eine Schnappeinrichtung 21 des Schneidbrettes 1. Anstelle des O-Rings 20 kann auch ein anderes ringförmiges Federelement vorgesehen sein. Die Schnappeinrichtung 21 verbindet den Schneidplattenuntersatz 3 lösbar mit der Schneidplatte 2.

Die Figur 7 zeigt die den Schneidplattenuntersatz 3 bildenden Unterlegleisten 11, 11' in verschiedenen Ansichten. In den Figuren 7c, 7c' sind die Unterlegleisten 11, 11' des Schneidplattenuntersatzes 3 mit Blick auf eine Oberseite 23, in den Figuren 7a, 7a' mit Blick auf eine Unterseite 24 und in den Figuren 7b, 7b' als Teilschnittdarstellung abgebildet. Für die in der Figur 2 sichtbare Überblattung 22 weisen die Unterlegleisten 11, 11' spiegelbildlich an der Oberseite 23 der Unterlegleiste 11 und an der Unterseite 24 der Unterlegleiste 11' quer oder schräg zu den Unterlegleisten 11, 11' verlaufende Ausnehmungen 25, 25' auf, die sich geneigt zwischen Seitenkanten 26, 26' bis auf die halbe Stärke der Unterlegleisten 11, 11' erstrecken.

An den Endabschnitten 12 der Unterlegleisten 11, 11', 11" an denen die Standfüße 9 angeordnet sind, erstrecken sich abgestufte zylindrische Durchgangslöcher 28 von der Oberseite 23 bis zu der Unterseite 24 der Unterlegleisten 11, 11', 11". Der der Oberseite 23 naheliegende Abschnitt der Durchgangslöcher 28 ist, wie die Figuren 7a, 7c und 7a', 7c' zeigen, gegenüber dem der Unterseite 24 naheliegenden Abschnitt der Durchgangslöcher 28 im Durchmesser geringer ausgebildet. Der im Durchmesser geringere Abschnitt bildet, wie die Figur 6 zeigt, das Kernloch für das in der Zeichnung nicht dargestellte Innengewinde des Schneidplattenuntersatzes 3, 3', 3", der breitere Abschnitt einen Aufnahmeraum für einen hinteren Teil 29 des Gewindebolzens 13. An dem hinteren Teil 29 des Gewindebolzens 13 ist eine seitlich über den Gewindebolzen 13 vorstehende Sicherungsscheibe 30 angeordnet, die verhindert, dass der Gewindebolzen 13 aus dem Schneidplattenuntersatz 3, 3', 3" herausgeschraubt werden kann. Die Stufe des Durchgangsloches 28 dient als Anschlag für die Sicherungsscheibe 30.

## Patentansprüche

1. Schneidbrett (1) zum Zerkleinern von Nahrungsmitteln, insbesondere zum Auflegen auf eine Arbeitsplatte einer Küche, mit einer Schneidplatte (2), die eine Schneidfläche (4) und eine der Schneidfläche (4) gegenüberliegende Unterseite (5) aufweist, und mit einem Schneidplattenuntersatz (3, 3', 3"), der die Schneidplatte (2) an der Unterseite (5) stützt, **dadurch gekennzeichnet, dass** das Schneidbrett (1) eine Schraubhöhenverstellung (8) für die Schneidplatte (2) aufweist.

2. Schneidbrett nach Anspruch 1, **dadurch gekennzeichnet, dass** die Schraubhöhenverstellung (8) auf der der Schneidplatte (2) zugeordneten Seite des Schneidplattenuntersatzes (3, 3', 3") angeordnet ist.

3. Schneidbrett nach Anspruch 2, **dadurch gekennzeichnet, dass** die Schraubhöhenverstellung (8) Gewindebolzen (13) für die Stützung der Schneidplatte (2) aufweist.

4. Schneidbrett nach Anspruch 2 oder 3, **dadurch gekennzeichnet, dass** die Schneidplatte (2) an der Unterseite (5) Eingriffselemente (14) aufweist, in die die Schraubhöhenverstellung (8) eingreift.

5. Schneidbrett nach einem der vorstehenden Ansprüche 2 bis 4, **dadurch gekennzeichnet, dass** die Schraubhöhenverstellung (8) des Schneidplattenuntersatzes (3, 3', 3") und/oder die Eingriffselemente (14) der Schneidplatte (2) eine Schnappeinrichtung (21) aufweisen.

6. Schneidbrett nach einem der vorangegangen Ansprüche, **dadurch gekennzeichnet, dass** der Schneidplattenuntersatz (3, 3', 3") von mindestens zwei im Winkel zueinander angeordneten, vorzugsweise lösbar miteinander verbunden Unterlegleisten (11, 11', 11 ") gebildet ist.

7. Schneidbrett nach Anspruch 6, **dadurch gekennzeichnet, dass** die Unterlegleisten (11, 11', 11") X-, T-, V-, U- oder sternförmig angeordnet sind und eine Überblattung (22) aufweisen.

8. Schneidbrett nach Anspruch 6 oder 7, **dadurch gekennzeichnet, dass** die Gewindebolzen (13) an Endabschnitten (12) der Unterlegleisten (11, 11', 11") angeordnet sind.
